# EUROPEAN PATENT APPLICATION

(11) **EP 4 734 529 A1**
(43) Date of publication of application: **29.04.2026**
(21) Application number: 24306788.1
(22) Date of filing: 23.10.2024
(51) Int. Cl.: H04N 21/2343, H04N 21/258, H04N 21/443, H04N 21/845

(54) **METHODS, ARCHITECTURES, APPARATUSES AND SYSTEMS ENERGY-AWARE CONTENT DISTRIBUTION**

(71) Applicant: InterDigital CE Patent Holdings, SAS, 75017 Paris (FR)
(72) Inventor: AUMONT, Franck, 35770 VERN SUR SEICHE (FR); HOUSSAINY, Hadi, 35700 RENNES (FR); LE MEUR, Olivier, 35160 TALENSAC (FR); BLONDE, Laurent, 35235 THORIGNE-FOUILLARD (FR)
(74) Representative: Interdigital

(57) **Abstract**

Procedures, methods, architectures, apparatuses, systems, devices, and computer program products for energy-aware content distribution. A client device receives, from a content server, information corresponding to a manifest file for a content item, the manifest file including energy consumption information for provision of the content item for at least one of a plurality of versions of the content item, selects a version of the content item whose corresponding energy consumption information matches a device profile of the client device and satisfies at least one energy control criterion, and downloads units of the selected version of the content item.

## Description

### BACKGROUND

The present disclosure is generally directed to the fields of communications, software and encoding, including, for example, to methods, architectures, apparatuses, systems directed to content provision in which a client can select energy consumption levels. The present disclosure is particularly suited for DASH.

### SUMMARY

In a first aspect, the present principles are directed to a method performed by a client device, the method including receiving, from a content server, information corresponding to a manifest file for a content item, the manifest file including energy consumption information for provision of the content item, for example to the client device or to its user, for at least one of a plurality of versions of the content item, selecting a version of the content item whose corresponding energy consumption information matches a device profile of the client device and satisfies at least one energy control criterion, and downloading units of the selected version of the content item.

The selecting can be performed in response to the client device being in an energy reduction mode set by at least one of an end-user, a service provider of the content server and a distribution system operator.

The at least one energy control criterion can include energy consumption control.

The method can further include monitoring for a change to the at least one energy control criterion, and upon determining a change to the at least one energy control criterion, selecting a version of the content item whose corresponding energy consumption information satisfies the changed at least one energy control criterion.

The method can further include transmitting, to the content server, a request for the content item, wherein the request for the content item can be a HTTP request, the content server a Dynamic Adaptive Streaming over HTTP, DASH, server, the manifest file a Media Presentation Descriptor manifest file, a version a Representation, the energy consumption information respectively included in an Adaptation Set for the corresponding Representation, and wherein downloading units of the selected version of the content item can include downloading an Initialization Segment for the selected version, and sequentially downloading Media Segments from the selected version.

In a second aspect, the present principles are directed to a client device including a processor configured to receive, from a content server, information corresponding to a manifest file for a content item, the manifest file including energy consumption information for provision of the content item, for example to the client device or to its user, for at least one of a plurality of versions of the content item, select a version of the content item whose corresponding energy consumption information matches a device profile of the client device and satisfies at least one energy control criterion, and download units of the selected version of the content item.

The processor can be configured to select the version of the content item in response to the client device being in an energy reduction mode set by at least one of an end-user, a service provider of the content server and a distribution system operator.

The at least one energy control criterion can include energy consumption control.

The processor can be further configured to monitor for a change to the at least one energy control criterion, and, upon determining a change to the at least one energy control criterion, select a version of the content item whose corresponding energy consumption information satisfies the changed at least one energy control criterion.

The energy consumption information can be representative of at least one of total energy consumption for provision of the content item and energy consumption for at least one function in a distribution chain providing the content item.

In a third aspect, the present principles are directed to a method performed by a content server, the method including receiving, from a client device a request for a content item, transmitting, to the client device, information corresponding to a manifest file for the content item, the manifest file identifying a plurality of versions of the content item and including energy consumption information for at least one of the plurality of versions of the content item, receiving, from the client device, a request for a version of the content item, and transmitting, to the client device, units of the requested version of the content item.

The method can further include generating the energy consumption information including, for at least one of the versions of the content item, an estimate of global energy consumption information for provision of the content item to the client device, and generating the manifest file including the energy consumption information.

In a fourth aspect, the present principles are directed to a content server including a processor configured to receive, from a client device a request for a content item, transmit, to the client device, information corresponding to a manifest file for the content item, the manifest file identifying a plurality of versions of the content item and including energy consumption information for at least one of the plurality of versions of the content item, receive, from the client device, a request for a version of the content item, and transmit, to the client device, units of the requested version of the content item.

The processor can be further configured to generate the energy consumption information including, for at least one of the versions of the content item, an estimate of global energy consumption information for provision of the content item to the client device, and generate the manifest file including the energy consumption information.

In a fifth aspect, the present principles are directed to a signal including a manifest file for a content item, the manifest file identifying a plurality of versions of the content item and including energy consumption information for provision of the content item to a client device requesting the content item for at least one of the plurality of versions of the content item.

### BRIEF DESCRIPTION OF THE DRAWINGS

A more detailed understanding may be had from the detailed description below, given by way of example in conjunction with drawings appended hereto. Figures in such drawings, like the detailed description, are examples. As such, the Figures (FIGs.) and the detailed description are not to be considered limiting, and other equally effective examples are possible and likely. Furthermore, like reference numerals ("ref.") in the FIGs. indicate like elements, and wherein:
FIG. 1 illustrates a block diagram of an example system, according to aspects of the present disclosure;
FIG. 2 illustrates a block diagram of an example DASH system;
FIG. 3 illustrates a DASH Media Presentation Descriptor, MPD, manifest file;
FIG. 4 illustrates a block diagram of a system for provision of energy consumption information to a server according to an embodiment of the present principles;
FIG. 5 illustrates a flow chart of a method for provision of energy consumption information according to an embodiment; and
FIG. 6 illustrates a method at a client according to an embodiment of the present principles.

### DETAILED DESCRIPTION

In the following detailed description, numerous specific details are set forth to provide a thorough understanding of embodiments and/or examples disclosed herein. However, it will be understood that such embodiments and examples may be practiced without some or all of the specific details set forth herein. In other instances, well-known methods, procedures, components and circuits have not been described in detail, so as not to obscure the following description. Further, embodiments and examples not specifically described herein may be practiced in lieu of, or in combination with, the embodiments and other examples described, disclosed or otherwise provided explicitly, implicitly and/or inherently (collectively "provided") herein. Although various embodiments are described and/or claimed herein in which an apparatus, system, device, etc. and/or any element thereof carries out an operation, process, algorithm, function, etc. and/or any portion thereof, it is to be understood that any embodiments described and/or claimed herein assume that any apparatus, system, device, etc. and/or any element thereof is configured to carry out any operation, process, algorithm, function, etc. and/or any portion thereof.

The invention is in the field of communications systems for video streaming, aiming at providing signaling mechanisms to enable a device to control the energy usage and the rendered video quality in the context of an adaptative streaming (e.g., MPEG-DASH, specified in ISO/IEC 23009-1) on a desktop or laptop computer, a smartphone, a tablet, a set-top box, or a television connected to the internet.

Reducing energy consumption of electronic video rendering devices has become important not only for manufacturers of such devices but also to limit the environmental impact of the related video streaming service chain (that, at one end, includes video rendering devices).

The energy requirements of video rendering devices and the video streaming service chain have increased owing to various factors. One such factor is the increase of video streaming services with multiple increasing resolutions from SD to HD, 4K and soon beyond. Another factor is the number of delivery functions such as pre-processing, upscaling, downscaling, encoding, transcoding, distribution, decoding and rendering. Further factors include the number of codecs used, the number of different end user device profiles, and the number of video formats such as high dynamic range (HDR) and standard dynamic range (SDR). It is readily understood that this is not compatible with the global attempts to reduce energy consumption, including in the video streaming service chain while maintaining a high Quality of Experience (QoE).

The ISO/IEC 23001-11 specification specifies metadata, referred to as green metadata, that facilitate the reduction of energy usage during media consumption (i.e., decoding and display operations). In Annex B, it specifies how to convey such metadata in adaptative streaming as MPEG-DASH timed metadata representation or as Display Attenuation Map representations. These representations are associated with the main video representation, and they can be requested by a DASH client in addition to the video representation for energy reduction purposes.

However, there is currently no information about the required energy to distribute one asset from post-production to renderer of the end user device. Indeed, the energy cost of each function of the video streaming service chain (in addition to similar information for codecs, resolution and bit rate) could be interesting information to adapt the end user device strategy for the selection of the representation to render.

Apparatuses and methods are presented herein for enabling a video rendering device to select a video asset representation that can allow a reduction of the global energy consumption.

In a non-limitative example, the present principles aim to enrich Dynamic Adaptive Streaming over HTTP (DASH) signaling to enable delivery of information about the energy consumption level for the distribution of an asset from post-production up to the renderer of the end-user device, i.e. from standard HTTP servers to HTTP clients. The additional signaling enables a DASH player to select an asset representation to reduce the global energy consumption when accessing a media or entertainment service. It will be appreciated that the present principles can be used in other (adaptive) streaming systems, such as for example HTTP Live Streaming.

Herein, as a non-limitative example, the asset is a video asset such as a video content item (e.g. a film).

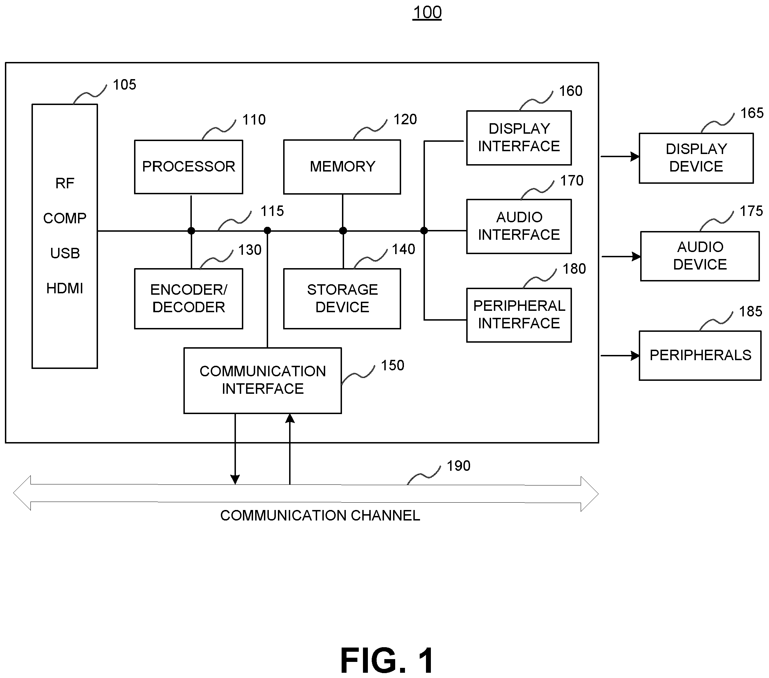

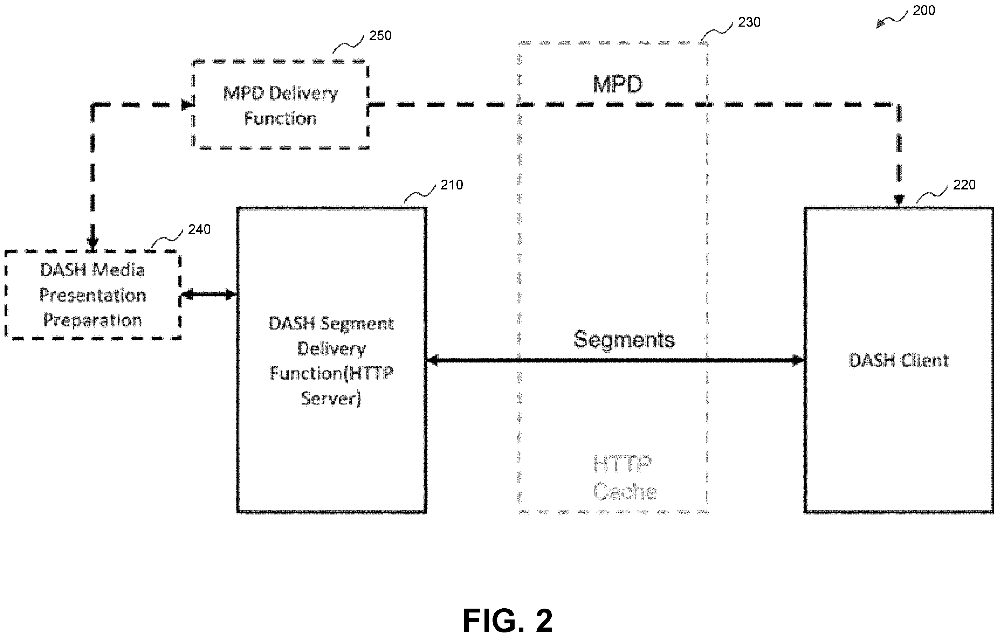

A system for processing and displaying content, with which various aspects and examples described herein may be implemented, is generally described in reference to FIG. 1, followed by a description of the aspects of the present principles in reference to FIGS. 2-6.

FIG. 1 illustrates a block diagram of an example system 100. The system 100 may be an electronic device including, for example, a personal computer, laptop computer, mobile phone, tablet computer, multimedia set-top box, digital television receiver, personal video recording system, connected home appliance, vehicle control and/or entertainment system, and server. One or more elements of the system 100, singly or in combination, may be implemented as an integrated circuit (IC), multiple ICs, and/or discrete components. For example, in one embodiment, the processing, encoding and/or decoding elements of system 100 are distributed across multiple ICs and/or discrete components. In some embodiments, the system 100 is communicatively coupled to and/or in communication with other systems or devices, via, for example, a communications bus or dedicated input/output ports.

One or more of the elements of system 100 may be provided within an integrated housing, with such elements being interconnected and able to transmit data therebetween using any suitable connection arrangement 115 generally known in the art, including, for example, an internal bus (e.g., I2C bus), wiring, and printed circuit boards.

The system 100 includes at least one processor 110 configured to execute instructions for implementing the embodiments (or aspects) described herein, including signal (or data) coding and processing. The processor 110 may be a general-purpose processor or microprocessor, digital signal processor (DSP), one or more microprocessors in association with a DSP core, a controller, a microcontroller, application specific integrated circuits (ASICs), field programmable gate arrays (FPGAs), a state machine, and the like. The processor 110 may include at least one central processing unit (CPU) and/or graphics processing unit (GPU), embedded memory, input and output interfaces, and other circuitries.

The system 100 includes at least one memory 120, for example, a volatile memory device and/or a non-volatile memory device. The system 100 includes a storage device 140, that may be or include non-volatile memory and/or dynamic volatile memory, including EEPROM, ROM, PROM, RAM, DRAM, SRAM, DDR, flash, magnetic disk drives, solid state drives (SSD) and/or optical disk drives. The storage device 140 may be or include, for example, an internal storage device, an attached storage device, and/or a network accessible storage device. Although shown separately, the memory 120 and the storage device 140 may be collocated, integrated together, or otherwise combined.

The system 100 includes an encoder/decoder module 130 configured to process video data and to provide encoded video data or decoded video data. The encoder/decoder module 130 may include one or more processors and/or memory (not shown). Although FIG. 1 depicts the encoder/decoder module 130 as a separate element of system 100, it will be understood that the processor 110 and the encoder/decoder module 130 may be collocated and/or integrated together as a combination of hardware and/or software, e.g., in an electronic package or chip. The encoder/decoder module 130 may be or include one or more modules that may be included in one or more separate devices that perform encoding and/or decoding functions.

Instructions for execution by the processor 110 and/or by the encoder/decoder module 130 may be stored in the storage device 140 and subsequently loaded into memory 120 for execution by the processor 110 and/or by the encoder/decoder module 130. In some embodiments, one or more of processor 110, memory 120, storage device 140, and encoder/decoder module 130 may store one or more items when performing the processes disclosed herein. Such items may include input video, decoded video or portions thereof, bitstreams, matrices, variables, operational logic, and intermediate and/or final results from processing of equations, formulas, or operations.

In some embodiments, the memory of the processor 110 and/or of the encoder/decoder module 130 is used to store instructions and/or provide working memory for video encoding and decoding functions. In some embodiments, memory external to the processor 110 and/or to the encoder/decoder module 130 (e.g., the memory 120 and/or the storage device 140) is used for one or more of these functions and/or, for example, to store the operating system of a television.

The system 100 may obtain or receive information via one or more input devices, interfaces, and/or ports as indicated in input block 105. Examples of the input devices include a radio frequency (RF) device for transmitting and/or receiving RF signals over various media, for example, RF signals received over the air from a broadcaster; component video (COMP) inputs; a Universal Serial Bus (USB) input; and/or a High-Definition Multimedia Interface (HDMI) input. Other examples include composite video input (not shown). In some embodiments, the input devices are associated with respective input processing elements, e.g., those generally known in the art. For example, the RF device may be associated with elements suitable for selecting a desired frequency (e.g., selecting or band-limiting a signal) or performing error correction on the signal. The USB and/or HDMI inputs may include respective interface processors and transceivers (or transmitters and receivers) for coupling the system 100 to other devices via USB and/or HDMI ports or connections. Various forms of input processing may be implemented, for example, by and/or within a separate input processing device or the processor 110.

The system 100 includes a communication interface 150 that enables wired and/or wireless communication with other devices, e.g., via a communication channel 190. The communication interface 150 may include one or more transceivers, modems, network cards and the like. The communication channel 190 may be or include wired and/or wireless mediums.

In some embodiments, data may be streamed to the system 100 via wired and/or wireless networks. Examples of such wireless networks include cellular, Bluetooth or Wi-Fi (e.g., IEEE 802.11) networks. The wired and/or wireless networks may include one or more base stations (e.g., cellular base stations, access points, etc.), and/or user equipment (e.g. cellular user equipment, stations, etc.), and/or other network elements that communicate with the system 100 via the communication interface 150 and communication channel 190, whereby the system 100 may obtain data streamed from streaming applications (e.g., OTT services) via various networks, including the Internet. In some embodiments, data is streamed to the system 100 via the input block 105 (e.g., using a set-top box that delivers data via the HDMI connection or the RF connection). In some embodiments, data is received by the system 100 in a non-streaming manner.

The system 100 may provide one or more output signals to one or more output devices. The output devices may include a display device 165 (e.g., touchscreen display, monitor, etc.), an audio device 175 (e.g., speakers), and other peripheral devices 185, including, for example, a stand-alone DVR, a disk player, a stereo system, a lighting system, and other devices that provide a function based on the output of the system 100. The display device 165 can be for a television, tablet, laptop, mobile phone, head-mounted display, or other device. In some embodiments, control signals are communicated between the system 100 and the display device 165, the audio device 175, and/or the peripheral devices 185, enabling device-to-device control with or without user intervention. The output devices may couple to and/or communicate with the system 100 via dedicated connections via respective display, audio, and peripheral interfaces 160, 170, 180. Alternatively, the output devices may couple to and/or communicate with the system 100 via the communication channel 190 and the communication interface 150.

The display device 165 and the audio device 175 may be collocated, integrated, or otherwise combined with the other components of system 100 in a single unit (e.g., a television). Alternatively, the display device 165 and the audio device 175 may be separate from one or more of the other components of the system 100. In embodiments in which the display device 165 and the audio device 175 are external components, the output signals may be provided via dedicated outputs and/or connections, including, for example, HDMI ports, USB ports, or COMP outputs.

FIG. 2 is a block diagram of an example DASH system 200 that enables delivery of continuous media content from standard HTTP servers 210 to HTTP clients 220 (i.e. DASH clients) and enable caching of content by standard HTTP caches 230.

A DASH media presentation preparation device 240 prepares assets for distribution and provides Media Presentation Descriptor (MPD) manifests to a MPD delivery server 250 and asset segments to the HTTP servers 210 (i.e. DASH segment delivery devices). The MPD delivery server 250 delivers MPDs, possibly via the HTTP caches, to clients 220. The HTTP server 210 delivers asset segments, possibly via the HTTP caches, to clients 220. It is noted that there can be a plurality of each displayed entity, for example a plurality of HTTP servers, a plurality of HTTP caches and so on.

The DASH system 200 can allow the highest visual quality considering various factors such as network bandwidth, display resolution and viewing conditions.

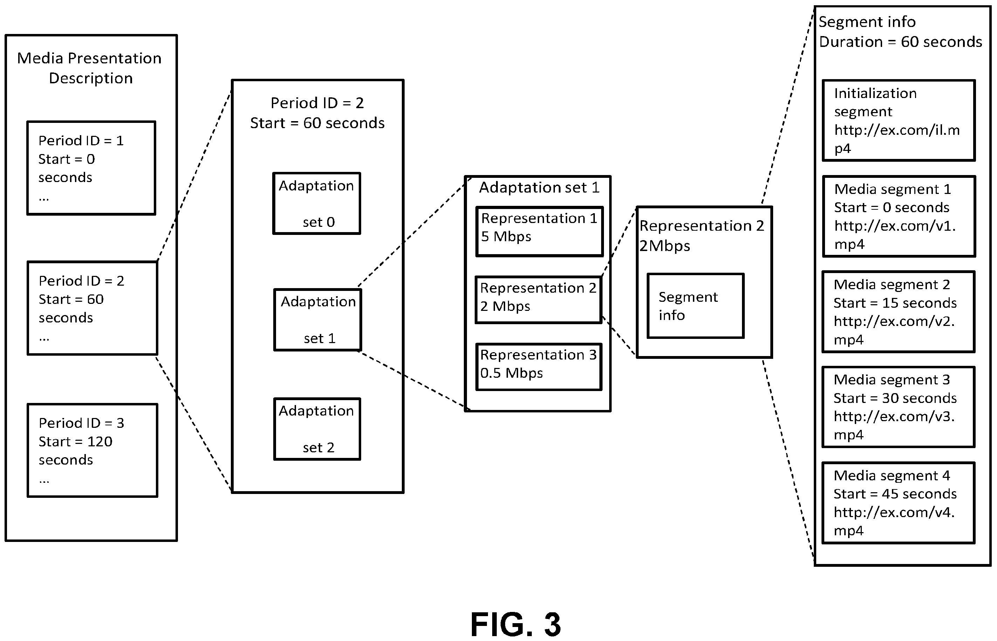

The information (i.e. signaling) in the MPD manifest file (of which an example is illustrated in FIG. 3) enables a DASH client (i.e. player) to select a (video) media representation (i.e. asset) and render (i.e. display) it on its screen or on a screen of a device to which it is connected.

The present principles provide signaling of energy consumption level in content distribution systems, for example using MPEG-DASH.

In MPEG-DASH, the MPD includes information called Adaptation Sets respectively corresponding to a set of interchangeable encoded versions of one or several media content components. Different periods of the content can have different Adaptation Sets. In conventional MPEG-DASH, the Adaptation Sets can provide information regarding different aspects, such as resolution, (required) bitrate, and language. An Adaptation Set includes information, 'representations', about different versions related to the aspect, and each representation identifies the content segments.

For example, as illustrated in FIG. 3, the MPD provides information for three different periods. For the period with ID=2, there are three Adaptation sets. Adaptation Set 1 is related to bitrate and provides three representations: one for 5 Mbps, one for 2 Mbps and one for 0.5 Mbps. The representation for 2 Mbps includes segment information related to the segments that make up the content of this version.

The present principles propose a new aspect related to energy consumption, which can be signalled in an "Energy Aware" Adaptation Set, which includes different "energy aware" representations. The representations include information about energy consumption of their corresponding version, which can enable a client to select a desired version of the content that satisfies one or more criteria.

The energy consumption information may be stored in Extensible Markup Language (XML) elements and attributes, which can ensure backward compatibility. The XML elements and attributes can be signalled in the MPD manifest file as an essential or supplemental Property in each representation of an Energy Aware Adaptation Set.

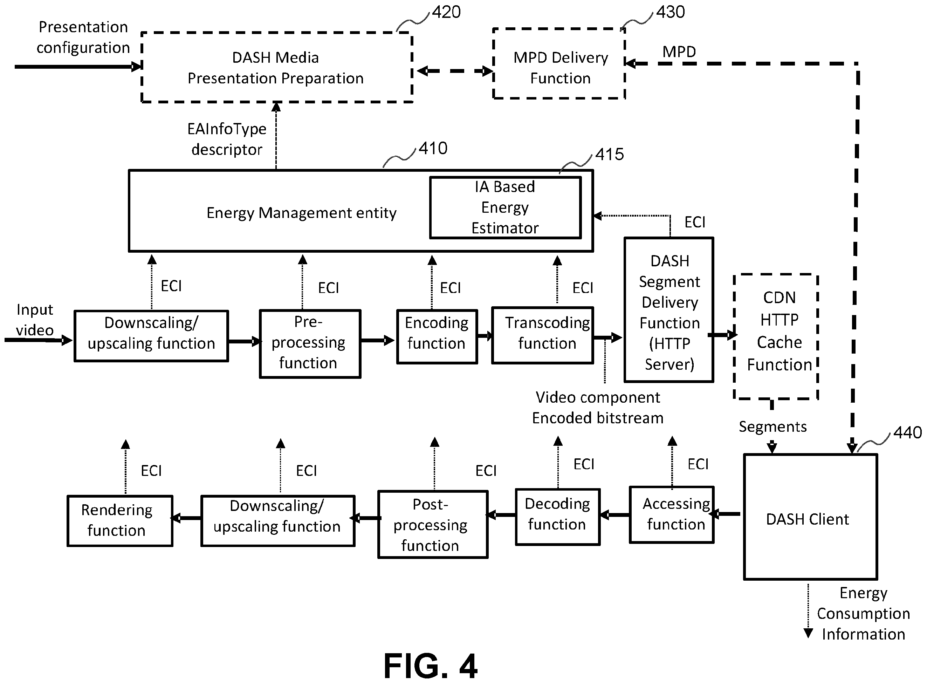

The energy consumption information can be global energy consumption information, i.e. representing energy consumption of the distribution chain, i.e. from the output of post-production up to the renderer, which can include rendering to a user (i.e. from after production to consumption) on the DASH client. The energy consumption information can also (in addition or instead) be information per function (e.g. encoding, streaming, decoding, rendering - see FIG. 4 for further details) of the adaptative video streaming chain, which can allow identification of the contribution of each component. The information for each representation may be different due to the difference of the video streaming configuration (encoding, upscaling, transcoding, ...).

In an embodiment, the Adaptation Set includes an Energy Aware Adaptation Set may include a Role descriptor (defined in ISO/IEC 23009-1:2022) with a @schemeIdUri attribute set to "urn:mpeg:dash:role:2011" and a @value attribute for example set to "eaa" (for Energy Aware Adaptation). In another embodiment, the Adaptation Set element does not include the Energy Aware role and contains certain representations associated with energy consumption levels and other representations not associated with energy consumption levels.

Further, the present principles provide an Energy Aware descriptor to signal the energy consumption of the distribution functions for any asset carried by an Energy Aware Adaptation Set. The XML elements and attributes for this descriptor are defined in a separate namespace "urn:mpeg:mpegI:green:2023". The example namespace designator "green:" is used to refer to this name space; naturally, another namespace designator could be used. The descriptor is a SupplementalProperty descriptor with the @schemeIdUri set to a unique URI (e.g., "urn:mpeg:mpegI:green:2024:ear", Energy Aware Representation). A single Energy Aware descriptor is present at the Representation level for each Representation in an Energy Aware Adaptation Set. The @value attribute of the Energy Aware descriptor shall not be present.

Table 1 lists an example of elements and attributes of the Energy Aware descriptor. The Energy Aware descriptor includes an EAR element whose attributes and sub-elements indicate the global energy consumption level for the streaming of the video asset from post-production to renderer. It can also indicate the energy consumption level per function of the video chain.

Multiple values of the energy level can be signalled in the element to consider the profile of the client (e.g. TV like, Smartphone like, PC like, Tablet like..., where 'like' enables rendering devices to identify themselves 'like' one of the listed devices). It will be appreciated that the energy required to perform the functions on the client depends on its characteristics (e.g. clock frequency, memory, processors, GPU...).

In case the energy level is provided by function, it can be signalled whether it is a hardware or software like function, which can allow the client to prefer one representation to another depending on this parameter since the difference of processing between software and hardware has a non negligeable impact on the energy consumption.

**Table 1: example of elements and attributes of the Energy Aware descriptor**

| Elements and attributes | Use | Data type | Description |
|---|---|---|---|
| **EAR** | M | green:EAInfoType | Information of energy to distribute the asset present in the Representation(s) of the Energy Aware Adaptation Set. |
| **EAR**@globalDistributionEn ergyConsumption | M | green: energyConsump tionLevelType | Information for the global energy required to distribute the Representation of the Energy Aware Adaptation Set. |
| **EAR**@distributionFunction | O | green: di stributionFunc tionType | Information of the distribution function by which the asset content of the representation passes through from the post-production up to the rendering on the dash client: e.g. pre-processing, upscaling, downscaling, encoding, transcoding before being rendered by the dash client. |
| **EAR**.globalDistributionEner gyConsumption@clientPro file | M | xs: string | The profile (e.g. TV like, Smartphone like, PC like or STB like) of the DASH client for which the global energy consumption level is provided. Allows the dash client to map the global energy consumption level and its own profile |
| **EAR**. globalDistributionEnergyCo nsumption@ energyConsumptionLevel | M | xs:decimal | The global energy consumption level of the DASH client profile in Wh |
| **EAR**@distributionFunction @ functionName | M | xs: string | The name of the function |
| **EAR@distributionFunction** @ HwOrSwFunction | O | xs: string | The hardware or software based processing for the function |
| **EAR**@distributionFunction @ functionEnergyConsumption Level | M | green: energyConsump tionLevelType | Information for the energy of a distribution function |
| **EAR**@distributionFunction @ functionEnergyConsumption Level@clientProfile | M | xs:string | The profile of the DASH client for which the function energy consumption level is provided. Allows the DASH client to map the function energy consumption level and its own profile |
| **EAR**@distributionFunction @ functionEnergyConsumption Level@displayModel | O | xs:int | The display model type of the client: |
| | | | 1 : Transmissive pixel |
| | | | 2 : Emissive pixel |
| | | | 4 and 8 : used for future type of display |
| **EAR**@distributionFunction @ functionEnergyConsumption Level@displaySize | O | xs:string | The size of the display in inches, e.g. 55 inches |
| **EAR**@distributionFunction @ functionEnergyConsumption Level@energyConsumption Level | M | xs:decimal | The function energy consumption level of the DASH client profile in Wh |
| **Key:** | | | |
| **For attributes: M=Mandatory, O=Optional.** | | | |
| **For elements: <minOccurs>..<maxOccurs> (N=unbounded)** | | | |
| Elements are bold; attributes are non-bold and preceded by an @. | | | |

The data types for various elements and attributes can be defined in an XML schema as shown below.

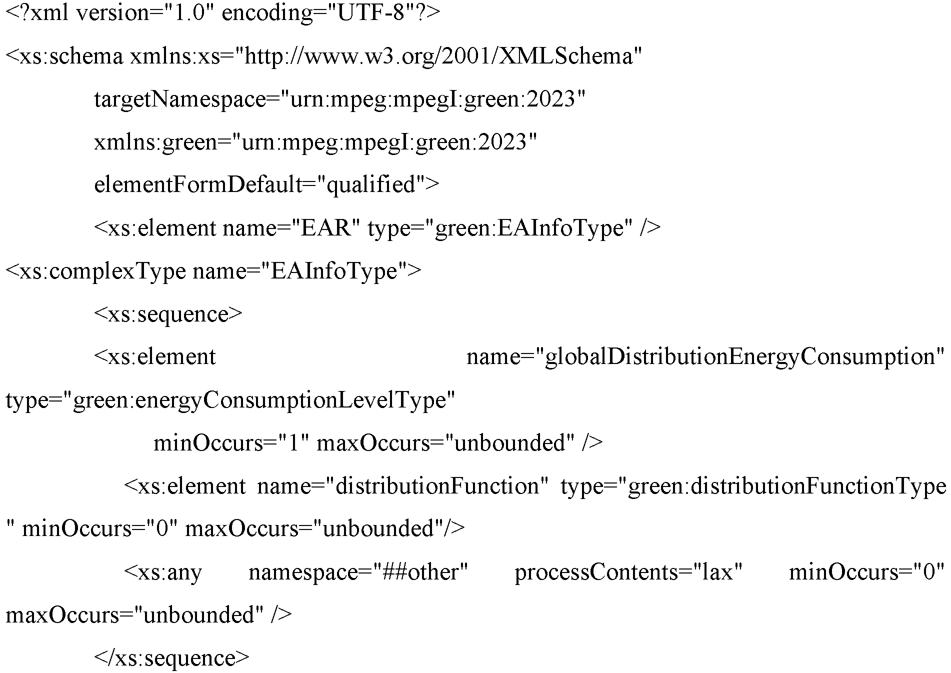

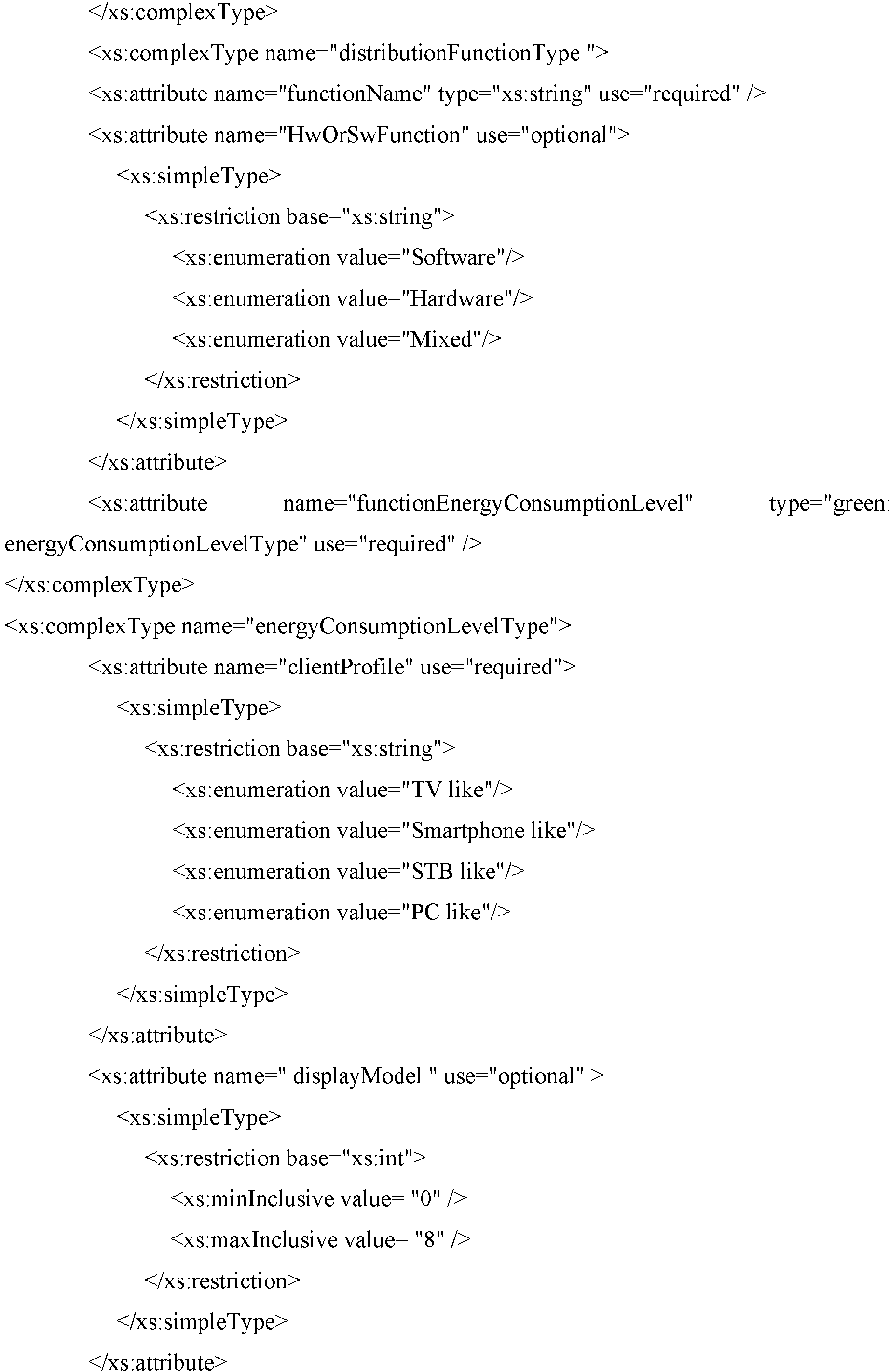

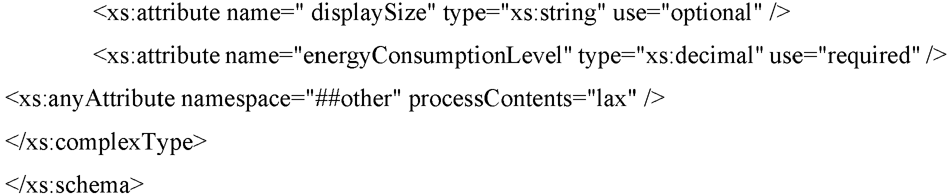

In another embodiment, the Energy Aware descriptor is a SupplementalProperty descriptor with the @schemeIdUri attribute set to a unique URI (e.g., "urn: mpeg: mpegI: green: 2023 :ear").

In another embodiment, the sizes of the defined attributes for the various elements of the attribute may be different based on the allowed range of values for the attribute.

The following example illustrates a DASH MPD with a presentation that includes a video Adaptation Set which include representations with ear SupplementalProperty and some without this SupplementalProperty.

```
 <?xml version="1.0" encoding="UTF-8"?>
 <MPD
        xmlns:xsi="http://www.w3 .org/2001/XMLSchema-instance"
        xmlns="urn:mpeg:DASH:schema:MPD:2011''
        xmlns:green="um:mpeg:mpegI:green:2023"
        xsi:schemaLocation="urn:mpeg:DASH:schema:MPD:xxxx"
        type="static"
        minBufferTime="PT4S"
        profiles="urn: mpeg: dash: profile: i soff-on-demand: 2011
 <BaseURL>http://cdn1.example.com/</BaseURL>
 <BaseURL>http://cdn2.example.com/</BaseURL>
 <Period>
        <!-- Video -->
        <AdaptationSet id="video0" mimeType="video/mp4" codecs="avc1.4D401F"
        frameRate="30000/1001" segmentAlignment="true" startWithSAP="1">
        <BaseURL>video/</BaseURL>
        <SegmentTemplate timescale="90000" media="$Bandwidth$/$Time$.mp4v">
          <SegmentTimeline>
             <S t="0" d="180180" r="432"/>
          </SegmentTimeline>
        </SegmentTemplate>
          <Representation id="v0" width="320" height="240" bandwidth="250000"/>
          <Representation id="v1" width="640" height="480" bandwidth="500000"/>
          <Representation id="v2" width="960" height="720" bandwidth="1000000"/>
        </AdaptationSet>
        <AdaptationSet id="video1" mimeType="video/mp4" codecs="avc1.4D401F"
        frameRate="30000/1001" segmentAlignment="true" startWithSAP="1">
        <BaseURL>video/</BaseURL>
        <SegmentTemplate timescale="90000" media="$Bandwidth$/$Time$.mp4v">
          <SegmentTimeline>
             <S t="0" d="180180" r="432"/>
          </SegmentTimeline>
        </SegmentTemplate>
        <Role schemeIdUri="urn:mpeg:dash:role:2011" value="eaa/>
        <Representation id="v0" width="320" height="240" bandwidth="250000"/>
        <Representation id="v1" width="640" height="480" bandwidth="500000"/>
        <Representation id="v2" width="960" height="720" bandwidth="1000000"/>
        <Representation id="v3" width="320" height="240" bandwidth="250000">
      < SupplementalProperty schemeIdUri="urn:mpeg:mpegI:green:2023:ear">
        <green:EAR>
          <green:globalDistributionEnergyConsumption clientProfile=" TV like"
 displayModel=2 displaySize="65 inches" energyConsumptionLevel=65.2 />
         <green:globalDistributionEnergyConsumption clientProfile=" TV like"
 displayModel=2 displaySize="55 inches" energyConsumptionLevel=58.1 />
          <green:globalDistributionEnergyConsumption clientProfile=" Smartphone like"
 displayModel=2 displaySize="6.5 inches" energyConsumptionLevel=20.5 />
          <green: distributionFunction functionName ="Encoding"
 energyConsumptionLevel=2.5 />
          <green: distributionFunction functionName ="Rendering" clientProfile=" TV like"
 displayModel=2 displaySize="55 inches" energyConsumptionLevel=48 />
 <green: distributionFunction functionName ="Rendering" clientProfile="Smartphone like"
 displayModel=2 displaySize "6.7 inches" energyConsumptionLevel=2 />
        </green:EAR>
 </SupplementalProperty>
 </Representation>
 <Representation id="v4" width="640" height="480" bandwidth="500000">
 < SupplementalProperty schemeIdUri="urn:mpeg:mpegI:green:2023 :ear">
 <green:EAR>
        <green:globalDistributionEnergyConsumption clientProfile=" TV like"
 energyConsumptionLevel=60.2 />
        <green:globalDistributionEnergyConsumption clientProfile=" Smartphone like"
 energyConsumptionLevel=21.2 />
        <green: distributionFunction functionName ="Encoding"
 energyConsumptionLevel=2.9 />
 <green: distributionFunction functionName ="Rendering _Upscale" clientProfile="TV like"
 energyConsumptionLevel=0.5 />
 </green:EAR>
 </SupplementalProperty>
 </Representation>
 <Representation id="v5" width="960" height="720" bandwidth="1000000">
     < SupplementalProperty schemeIdUri="urn:mpeg:mpegI:green:2023 :ear">
        <green:EAR>
          <green:globalDistributionEnergyConsumption clientProfile=" TV like"
 energyConsumptionLevel=63 />
          <green:globalDistributionEnergyConsumption clientProfile=" Smartphone like"
 energyConsumptionLevel=21.8 />
 <green: distributionFunction functionName ="Encoding"
 energyConsumptionLevel=2.9 />
  
 </green:EAR>
 </SupplementalProperty>
 </Representation>
 </AdaptationSet>
 </Period>
 </MPD>
```

The present principles provide a DASH server that, in addition to conventional functions, that can compute the global or per function energy consumption information, generate the element "EAR" of type "green:EAInfoType" based on the energy consumption levels, and include the element in a MPD for content requested by a client (i.e. end-user device).

FIG. 4 illustrates a block diagram of a system for provision of energy consumption information to the DASH server in which an Energy Management Entity 410 can be provided with respective energy consumption information (sometimes "ECI" for legibility reasons) by each function of the video distribution chain (that for example can obtain the information based on past processing activities) or can be computed by an AI implemented Energy Estimator 415 using models trained to provide information per function. The Energy Management Entity 410 can then provide energy consumption information ("EAInfo Type Descriptor") to a DASH Media Presentation Preparation Unit 420 for inclusion in a corresponding MPD that can be delivered by a MPD Delivery Function 430 to a DASH Client 440 upon request from it.

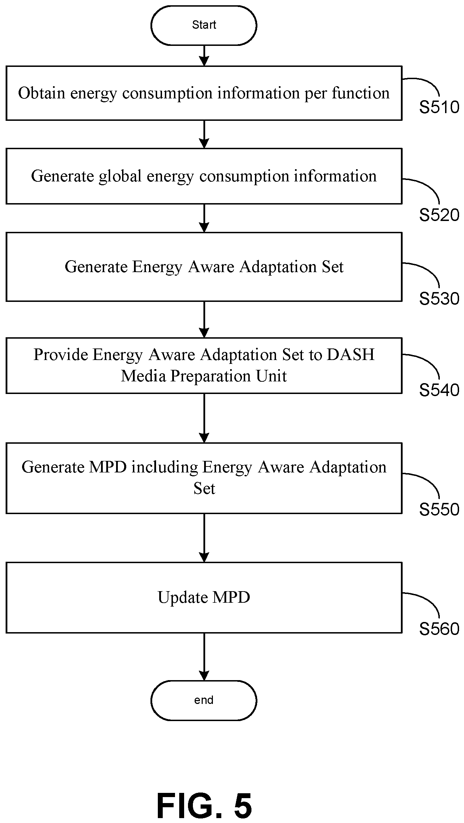

FIG. 5 illustrates a flow chart of a method for provision of energy consumption information according to an embodiment. The method can be implemented by device like a DASH server, a device dedicated to the provision or a plurality of devices. For simplicity of description, the method will be described as being implemented by a single device.

In step S510, the device obtains individual energy consumption information from different devices performing different functions in the content distribution chain, e.g. encoding.

In step S520, the device generates global energy consumption information, for example by adding the received individual energy consumption information. The device can also use its AI model to estimate the information, for example to estimate information that it has not received or to estimate the global energy consumption information based on received information.

In step S530, the device generates an Energy Aware Adaptation Set based on the global energy consumption information. The device can further include individual energy consumption information, i.e. per function.

In step S540, the device provides the Energy Aware Adaptation Set to the DASH Media Preparation Unit.

In step S550, the DASH Media Preparation Unit of the device generates a MPD that includes the Energy Aware Adaptation Set.

In step S560, in response to a change of estimated energy consumption, the device provides an updated Energy Aware Adaptation Set to the DASH Media Preparation Unit that generates an updated MPD. This can for example occur upon a change of device that performs a function in the content distribution chain.

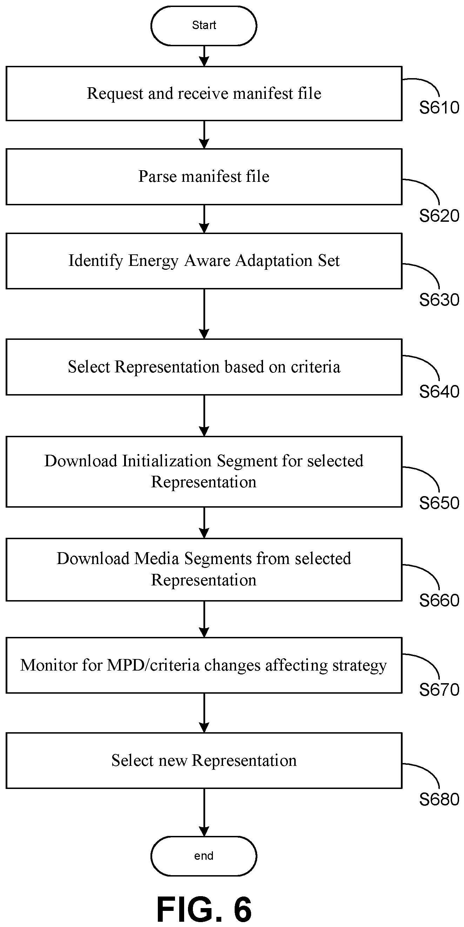

FIG. 6 illustrates a method at a client according to an embodiment of the present principles. As an example, the method will be described as being performed by a DASH client.

For illustrative purposes, it is assumed that the client is in an "Energy Aware mode" in which it attempts to reduce (e.g. optimize) its energy consumption and reduce its carbon footprint. The Energy Aware mode can for example be activated by the end-user, the service provider or the system operator.

As will be described, the DASH client device ("client") is guided by the energy consumption information provided in the manifest file (i.e. MPD) when requesting streaming of videos with associated Energy Aware Representations using the signalling already described herein.

In step S610, the client transmits an HTTP request for a content item to a content server and downloads (i.e. receives) the corresponding MPD file from the content server. The content item has typically been selected by a user of the device, but can also be imposed by for example an auto-play function.

In step S620, the client parses the MPD file to generate a corresponding in-memory representation of the XML elements in the MPD file.

In step S630, as the client is in the Energy Aware mode, it identifies the available video Energy Aware Adaptation Set element in a Period with a corresponding Role descriptor (i.e. a Role descriptor whose @value, in this example, is set to 'eaa'). The Energy Aware Adaptation Set can be used to select a representation that matches the client profile (e.g. Smartphone like) with the Energy Aware descriptor further to implement its energy reduction strategy.

In step S640, the device selects (i.e. determines) one of the available representations of the video Energy Aware Adaptation Set based on one or more criteria. The criteria can include one or more of the capabilities of the device (e.g. the codec(s) it supports), current network conditions, and energy consumption control (i.e. linked to the device's battery level and/or a current energy reduction strategy). The energy reduction strategy can be pre-set, set by a user of the device or imposed by the operator or the service provider. In the example, it is assumed that one criterion is energy consumption control.

In step S650, the client downloads the Initialization Segment for the selected Representation.

In step S660, the client sequentially downloads Media Segments from the selected video Representation. The downloaded Media Segments are then decoded and the decoded frames are rendered. It is noted that the media segments can, in particular, be rendered on a display that is separate from the device.

In step S670, the client regularly monitors for changes to the one or more criteria that could result in a change of representation and changes in the MPD. To this end, the client can for example monitor if its battery level goes below a given value and if its energy reduction strategy (that can be changed by a user or by the operator or the service provider upon reception of a message from one of these entities) has changed. When it comes to the MPD, the client can compare a newly received MPD with a previously received MPD.

In case changes are detected, in step S680, the client selects a new Energy Aware Representation energy based on its current criteria and the information in the Energy Aware descriptor (i.e. energy consumption information). The client then returns to step S650 to download Initialization Segment of the new representation and the corresponding media segments.

As can be seen, the present principles can provide a solution that enables flexible signaling of energy consumption level required to distribute one video from a server to a client in an MPEG-DASH media presentation descriptor (MPD) file and associate it with the related video data signaled as a representation in the MPD. This can enable a client to identify, in term of energy consumption, the video representation that satisfies (or best approaches) its energy consumption strategy, for example to control the use of its battery and to respect the energy reduction requested by its service provider or operator. The service provider can use the present principles instead of transmitting metadata within the codec bitstream.

### Conclusion

Although features and elements are provided above in particular combinations, one of ordinary skill in the art will appreciate that each feature or element can be used alone or in any combination with the other features and elements. The present disclosure is not to be limited in terms of the particular embodiments described in this application, which are intended as illustrations of various aspects. Many modifications and variations may be made without departing from its spirit and scope, as will be apparent to those skilled in the art. No element, act, or instruction used in the description of the present application should be construed as critical or essential to the invention unless explicitly provided as such. Functionally equivalent methods and apparatuses within the scope of the disclosure, in addition to those enumerated herein, will be apparent to those skilled in the art from the foregoing descriptions. Such modifications and variations are intended to fall within the scope of the appended claims. The present disclosure is to be limited only by the terms of the appended claims, along with the full scope of equivalents to which such claims are entitled. It is to be understood that this disclosure is not limited to particular methods or systems.

The foregoing embodiments are discussed, for simplicity, with regard to the terminology and structure of infrared capable devices, i.e., infrared emitters and receivers. However, the embodiments discussed are not limited to these systems but may be applied to other systems that use other forms of electromagnetic waves or non-electromagnetic waves such as acoustic waves.

It is also to be understood that the terminology used herein is for the purpose of describing particular embodiments only, and is not intended to be limiting. As used herein, the term "video" or the term "imagery" may mean any of a snapshot, single image and/or multiple images displayed over a time basis. As another example, when referred to herein, the terms "user equipment" and its abbreviation "UE", the term "remote" and/or the terms "head mounted display" or its abbreviation "HMD" may mean or include (i) a wireless transmit and/or receive unit (WTRU); (ii) any of a number of embodiments of a WTRU; (iii) a wireless-capable and/or wired-capable (e.g., tetherable) device configured with, inter alia, some or all structures and functionality of a WTRU; (iii) a wireless-capable and/or wired-capable device configured with less than all structures and functionality of a WTRU; or (iv) the like. Details of an example WTRU, which may be representative of any WTRU recited herein, are provided herein with respect to FIGs. 1A-1D. As another example, various disclosed embodiments herein *supra* and *infra* are described as utilizing a head mounted display. Those skilled in the art will recognize that a device other than the head mounted display may be utilized and some or all of the disclosure and various disclosed embodiments can be modified accordingly without undue experimentation. Examples of such other device may include a drone or other device configured to stream information for providing the adapted reality experience.

In addition, the methods provided herein may be implemented in a computer program, software, or firmware incorporated in a computer-readable medium for execution by a computer or processor. Examples of computer-readable media include electronic signals (transmitted over wired or wireless connections) and computer-readable storage media. Examples of computer-readable storage media include, but are not limited to, a read only memory (ROM), a random access memory (RAM), a register, cache memory, semiconductor memory devices, magnetic media such as internal hard disks and removable disks, magnetooptical media, and optical media such as CD-ROM disks, and digital versatile disks (DVDs). A processor in association with software may be used to implement a radio frequency transceiver for use in a WTRU, UE, terminal, base station, RNC, or any host computer.

Variations of the method, apparatus and system provided above are possible without departing from the scope of the invention. In view of the wide variety of embodiments that can be applied, it should be understood that the illustrated embodiments are examples only, and should not be taken as limiting the scope of the following claims. For instance, the embodiments provided herein include handheld devices, which may include or be utilized with any appropriate voltage source, such as a battery and the like, providing any appropriate voltage.

Moreover, in the embodiments provided above, processing platforms, computing systems, controllers, and other devices that include processors are noted. These devices may include at least one Central Processing Unit ("CPU") and memory. In accordance with the practices of persons skilled in the art of computer programming, reference to acts and symbolic representations of operations or instructions may be performed by the various CPUs and memories. Such acts and operations or instructions may be referred to as being "executed," "computer executed" or "CPU executed."

One of ordinary skill in the art will appreciate that the acts and symbolically represented operations or instructions include the manipulation of electrical signals by the CPU. An electrical system represents data bits that can cause a resulting transformation or reduction of the electrical signals and the maintenance of data bits at memory locations in a memory system to thereby reconfigure or otherwise alter the CPU's operation, as well as other processing of signals. The memory locations where data bits are maintained are physical locations that have particular electrical, magnetic, optical, or organic properties corresponding to or representative of the data bits. It should be understood that the embodiments are not limited to the above-mentioned platforms or CPUs and that other platforms and CPUs may support the provided methods.

The data bits may also be maintained on a computer readable medium including magnetic disks, optical disks, and any other volatile (e.g., Random Access Memory (RAM)) or non-volatile (e.g., Read-Only Memory (ROM)) mass storage system readable by the CPU. The computer readable medium may include cooperating or interconnected computer readable medium, which exist exclusively on the processing system or are distributed among multiple interconnected processing systems that may be local or remote to the processing system. It should be understood that the embodiments are not limited to the above-mentioned memories and that other platforms and memories may support the provided methods.

In an illustrative embodiment, any of the operations, processes, etc. described herein may be implemented as computer-readable instructions stored on a computer-readable medium. The computer-readable instructions may be executed by a processor of a mobile unit, a network element, and/or any other computing device.

There is little distinction left between hardware and software implementations of aspects of systems. The use of hardware or software is generally (but not always, in that in certain contexts the choice between hardware and software may become significant) a design choice representing cost versus efficiency trade-offs. There may be various vehicles by which processes and/or systems and/or other technologies described herein may be effected (e.g., hardware, software, and/or firmware), and the preferred vehicle may vary with the context in which the processes and/or systems and/or other technologies are deployed. For example, if an implementer determines that speed and accuracy are paramount, the implementer may opt for a mainly hardware and/or firmware vehicle. If flexibility is paramount, the implementer may opt for a mainly software implementation. Alternatively, the implementer may opt for some combination of hardware, software, and/or firmware.

The foregoing detailed description has set forth various embodiments of the devices and/or processes via the use of block diagrams, flowcharts, and/or examples. Insofar as such block diagrams, flowcharts, and/or examples include one or more functions and/or operations, it will be understood by those within the art that each function and/or operation within such block diagrams, flowcharts, or examples may be implemented, individually and/or collectively, by a wide range of hardware, software, firmware, or virtually any combination thereof. In an embodiment, several portions of the subject matter described herein may be implemented via Application Specific Integrated Circuits (ASICs), Field Programmable Gate Arrays (FPGAs), digital signal processors (DSPs), and/or other integrated formats. However, those skilled in the art will recognize that some aspects of the embodiments disclosed herein, in whole or in part, may be equivalently implemented in integrated circuits, as one or more computer programs running on one or more computers (e.g., as one or more programs running on one or more computer systems), as one or more programs running on one or more processors (e.g., as one or more programs running on one or more microprocessors), as firmware, or as virtually any combination thereof, and that designing the circuitry and/or writing the code for the software and or firmware would be well within the skill of one of skill in the art in light of this disclosure. In addition, those skilled in the art will appreciate that the mechanisms of the subject matter described herein may be distributed as a program product in a variety of forms, and that an illustrative embodiment of the subject matter described herein applies regardless of the particular type of signal bearing medium used to actually carry out the distribution. Examples of a signal bearing medium include, but are not limited to, the following: a recordable type medium such as a floppy disk, a hard disk drive, a CD, a DVD, a digital tape, a computer memory, etc., and a transmission type medium such as a digital and/or an analog communication medium (e.g., a fiber optic cable, a waveguide, a wired communications link, a wireless communication link, etc.).

Those skilled in the art will recognize that it is common within the art to describe devices and/or processes in the fashion set forth herein, and thereafter use engineering practices to integrate such described devices and/or processes into data processing systems. That is, at least a portion of the devices and/or processes described herein may be integrated into a data processing system via a reasonable amount of experimentation. Those having skill in the art will recognize that a typical data processing system may generally include one or more of a system unit housing, a video display device, a memory such as volatile and non-volatile memory, processors such as microprocessors and digital signal processors, computational entities such as operating systems, drivers, graphical user interfaces, and applications programs, one or more interaction devices, such as a touch pad or screen, and/or control systems including feedback loops and control motors (e.g., feedback for sensing position and/or velocity, control motors for moving and/or adjusting components and/or quantities). A typical data processing system may be implemented utilizing any suitable commercially available components, such as those typically found in data computing/communication and/or network computing/communication systems.

The herein described subject matter sometimes illustrates different components included within, or connected with, different other components. It is to be understood that such depicted architectures are merely examples, and that in fact many other architectures may be implemented which achieve the same functionality. In a conceptual sense, any arrangement of components to achieve the same functionality is effectively "associated" such that the desired functionality may be achieved. Hence, any two components herein combined to achieve a particular functionality may be seen as "associated with" each other such that the desired functionality is achieved, irrespective of architectures or intermedial components. Likewise, any two components so associated may also be viewed as being "operably connected", or "operably coupled", to each other to achieve the desired functionality, and any two components capable of being so associated may also be viewed as being "operably couplable" to each other to achieve the desired functionality. Specific examples of operably couplable include but are not limited to physically mateable and/or physically interacting components and/or wirelessly interactable and/or wirelessly interacting components and/or logically interacting and/or logically interactable components.

With respect to the use of substantially any plural and/or singular terms herein, those having skill in the art can translate from the plural to the singular and/or from the singular to the plural as is appropriate to the context and/or application. The various singular/plural permutations may be expressly set forth herein for sake of clarity.

It will be understood by those within the art that, in general, terms used herein, and especially in the appended claims (e.g., bodies of the appended claims) are generally intended as "open" terms (e.g., the term "including" should be interpreted as "including but not limited to," the term "having" should be interpreted as "having at least," the term "includes" should be interpreted as "includes but is not limited to," etc.). It will be further understood by those within the art that if a specific number of an introduced claim recitation is intended, such an intent will be explicitly recited in the claim, and in the absence of such recitation no such intent is present. For example, where only one item is intended, the term "single" or similar language may be used. As an aid to understanding, the following appended claims and/or the descriptions herein may include usage of the introductory phrases "at least one" and "one or more" to introduce claim recitations. However, the use of such phrases should not be construed to imply that the introduction of a claim recitation by the indefinite articles "a" or "an" limits any particular claim including such introduced claim recitation to embodiments including only one such recitation, even when the same claim includes the introductory phrases "one or more" or "at least one" and indefinite articles such as "a" or "an" (e.g., "a" and/or "an" should be interpreted to mean "at least one" or "one or more"). The same holds true for the use of definite articles used to introduce claim recitations. In addition, even if a specific number of an introduced claim recitation is explicitly recited, those skilled in the art will recognize that such recitation should be interpreted to mean at least the recited number (e.g., the bare recitation of "two recitations," without other modifiers, means at least two recitations, or two or more recitations). Furthermore, in those instances where a convention analogous to "at least one of A, B, and C, etc." is used, in general such a construction is intended in the sense one having skill in the art would understand the convention (e.g., "a system having at least one of A, B, and C" would include but not be limited to systems that have A alone, B alone, C alone, A and B together, A and C together, B and C together, and/or A, B, and C together, etc.). In those instances where a convention analogous to "at least one of A, B, or C, etc." is used, in general such a construction is intended in the sense one having skill in the art would understand the convention (e.g., "a system having at least one of A, B, or C" would include but not be limited to systems that have A alone, B alone, C alone, A and B together, A and C together, B and C together, and/or A, B, and C together, etc.). It will be further understood by those within the art that virtually any disjunctive word and/or phrase presenting two or more alternative terms, whether in the description, claims, or drawings, should be understood to contemplate the possibilities of including one of the terms, either of the terms, or both terms. For example, the phrase "A or B" will be understood to include the possibilities of "A" or "B" or "A and B." Further, the terms "any of" followed by a listing of a plurality of items and/or a plurality of categories of items, as used herein, are intended to include "any of," "any combination of," "any multiple of," and/or "any combination of multiples of" the items and/or the categories of items, individually or in conjunction with other items and/or other categories of items. Moreover, as used herein, the term "set" is intended to include any number of items, including zero. Additionally, as used herein, the term "number" is intended to include any number, including zero. And the term "multiple", as used herein, is intended to be synonymous with "a plurality".

In addition, where features or aspects of the disclosure are described in terms of Markush groups, those skilled in the art will recognize that the disclosure is also thereby described in terms of any individual member or subgroup of members of the Markush group.

As will be understood by one skilled in the art, for any and all purposes, such as in terms of providing a written description, all ranges disclosed herein also encompass any and all possible subranges and combinations of subranges thereof. Any listed range can be easily recognized as sufficiently describing and enabling the same range being broken down into at least equal halves, thirds, quarters, fifths, tenths, etc. As a non-limiting example, each range discussed herein may be readily broken down into a lower third, middle third and upper third, etc. As will also be understood by one skilled in the art all language such as "up to," "at least," "greater than," "less than," and the like includes the number recited and refers to ranges which can be subsequently broken down into subranges as discussed above. Finally, as will be understood by one skilled in the art, a range includes each individual member. Thus, for example, a group having 1-3 cells refers to groups having 1, 2, or 3 cells. Similarly, a group having 1-5 cells refers to groups having 1, 2, 3, 4, or 5 cells, and so forth.

Moreover, the claims should not be read as limited to the provided order or elements unless stated to that effect. In addition, use of the terms "means for" in any claim is intended to invoke 35 U.S.C. §112, 6 or means-plus-function claim format, and any claim without the terms "means for" is not so intended.

## Claims

1. A method performed by a client device, the method comprising:
receiving, from a content server, information corresponding to a manifest file for a content item, the manifest file comprising energy consumption information for provision of the content item for at least one of a plurality of versions of the content item;
selecting a version of the content item whose corresponding energy consumption information matches a device profile of the client device and satisfies at least one energy control criterion; and
downloading units of the selected version of the content item.

2. The method of claim 1, wherein:
the selecting is performed in response to the client device being in an energy reduction mode set by at least one of an end-user, a service provider of the content server and a distribution system operator.

3. The method of claim 1 or 2, wherein:
the at least one energy control criterion comprises energy consumption control.

4. The method of any one of the previous claims, further comprising:
monitoring for a change to the at least one energy control criterion; and
upon determining a change to the at least one energy control criterion, selecting a version of the content item whose corresponding energy consumption information satisfies the changed at least one energy control criterion.

5. The method of any one of the previous claims, further comprising:
transmitting, to the content server, a request for the content item;
wherein the request for the content item is a HTTP request, the content server is a Dynamic Adaptive Streaming over HTTP, DASH, server, the manifest file is a Media Presentation Descriptor manifest file, a version is a Representation, the energy consumption information is respectively included in an Adaptation Set for the corresponding Representation; and wherein
downloading units of the selected version of the content item comprises:
downloading an Initialization Segment for the selected version; and
sequentially downloading Media Segments from the selected version.

6. A client device comprising a processor configured to:
receive, from a content server, information corresponding to a manifest file for a content item, the manifest file comprising energy consumption information for provision of the content item for at least one of a plurality of versions of the content item;
select a version of the content item whose corresponding energy consumption information matches a device profile of the client device and satisfies at least one energy control criterion; and
download units of the selected version of the content item.

7. The client device of claim 6, wherein:
the processor configured to select the version of the content item in response to the client device being in an energy reduction mode set by at least one of an end-user, a service provider of the content server and a distribution system operator.

8. The client device of claim 6 or 7, wherein:
the at least one energy control criterion comprises energy consumption control.

9. The client device of any one of claims 6-8, wherein the processor is further configured to:
monitor for a change to the at least one energy control criterion; and
upon determining a change to the at least one energy control criterion, select a version of the content item whose corresponding energy consumption information satisfies the changed at least one energy control criterion.

10. The client device of any one of claims 6-9, wherein:
the energy consumption information is representative of at least one of total energy consumption for provision of the content item and energy consumption for at least one function in a distribution chain providing the content item.

11. A method performed by a content server, the method comprising:
receiving, from a client device a request for a content item;
transmitting, to the client device, information corresponding to a manifest file for the content item, the manifest file identifying a plurality of versions of the content item and comprising energy consumption information for at least one of the plurality of versions of the content item;
receiving, from the client device, a request for a version of the content item; and
transmitting, to the client device, units of the requested version of the content item.

12. The method of claim 11, further comprising:
generating the energy consumption information comprising, for at least one of the versions of the content item, an estimate of global energy consumption information for provision of the content item to the client device; and
generating the manifest file comprising the energy consumption information.

13. A content server comprising a processor configured to:
receive, from a client device a request for a content item;
transmit, to the client device, information corresponding to a manifest file for the content item, the manifest file identifying a plurality of versions of the content item and comprising energy consumption information for at least one of the plurality of versions of the content item;
receive, from the client device, a request for a version of the content item; and
transmit, to the client device, units of the requested version of the content item.

14. The content server of claim 13, wherein the processor is further configured to:
generate the energy consumption information comprising, for at least one of the versions of the content item, an estimate of global energy consumption information for provision of the content item to the client device; and
generate the manifest file comprising the energy consumption information.

15. A signal comprising a manifest file for a content item, the manifest file identifying a plurality of versions of the content item and comprising energy consumption information for provision of the content item to a client device requesting the content item for at least one of the plurality of versions of the content item.
